# FASCICULE DE BREVET EUROPEEN

(11) **EP 3 029 388 B1**
(45) Date de publication et mention de la délivrance du brevet: **20.12.2017**
(21) Numéro de dépôt: 15193372.8
(22) Date de dépôt: 06.11.2015
(51) Int. Cl.: F24F 11/00

(54) **SYSTÈME DE FILTRAGE À DÉTECTION D'ENCRASSEMENT POUR INSTALLATION DE CHAUFFAGE, VENTILATION OU CLIMATISATION**
FILTERSYSTEM MIT ERFASSUNG DER VERSCHMUTZUNG FÜR HEIZ-, LÜFTUNGS- ODER KLIMAANLAGE
FILTERING SYSTEM WITH CLOGGING DETECTION FOR HVAC INSTALLATION

(30) Priorité: 05.12.2014 FR 1461984
(43) Date de publication de la demande: 08.06.2016
(73) Titulaire: Schneider Electric Industries SAS, 92500 Rueil-Malmaison (FR)
(72) Inventeur: LOPEZ NIUBO, Josep, 38050 GRENOBLE (FR); PERRIN, Alain, 38050 GRENOBLE (FR)
(74) Mandataire: Tripodi, Paul

(56) Documents cités:
- WO-A1-03/051489
- WO-A2-03/014838
- DE-A1- 10 245 911
- JP-A- H1 170 310
- JP-A- S63 178 814
- NL-A- 7 610 952
- US-A- 5 796 472
- US-A1- 2006 187 070
- US-A1- 2010 313 748

## Description

### Domaine technique de l'invention

La présente invention se rapporte à un système de filtrage à mesure d'encrassement pour installation de chauffage, ventilation ou climatisation (HVAC). Le système de filtrage sera notamment adapté pour être employé dans une solution de refroidissement d'une armoire électrique.

### Etat de la technique

Les brevets US7012685B1 et US8744780B2 décrivent tous deux des systèmes de filtrage pour installation de chauffage, ventilation ou climatisation (HVAC) incluant une solution de détection d'encrassement. Les solutions de détection d'encrassement emploient un émetteur et un récepteur positionnés de part et d'autre du filtre, l'émetteur émettant faisceau à travers le filtre à destination du récepteur. Le signal généré par le récepteur après réception du faisceau est ensuite traité par une unité de traitement en vue d'en déduire un degré d'encrassement du filtre. Lorsque ce degré d'encrassement dépasse un certain seuil, un signal d'alerte est par exemple envoyé. Ces solutions s'avèrent particulièrement encombrantes car elles exigent d'écarter suffisamment l'émetteur du récepteur de part et d'autre du filtre. Il est aussi connu de l'art antérieur le document US 2010/313748 décrivant un système de surveillance de filtre à air ainsi que le document WO 03/051489 concernant un dispositif destiné à détecter l'état d'un filtre.

Le but de l'invention est de proposer un système de filtrage à mesure d'encrassement qui soit fiable, simple à mettre en oeuvre et dont le filtre s'avère facile à remplacer.

### Exposé de l'invention

Ce but est atteint par un système de filtrage pour installation de chauffage, ventilation ou climatisation, comprenant :
- un filtre fabriqué dans un matériau filtrant et destiné à être traversé par un flux d'air,
- au moins une unité de mesure d'encrassement comprenant un émetteur agencé pour émettre un faisceau et un récepteur agencé pour recevoir ledit faisceau,
- une unité de traitement agencée pour commander l'émission du faisceau par ledit émetteur et pour traiter le signal généré par le récepteur après réception du faisceau,
- caractérisé en ce que :
- l'unité de mesure d'encrassement est noyée dans ledit filtre,
- ledit émetteur est agencé par rapport audit récepteur pour émettre un faisceau suivant une direction transversale à celle du flux d'air et située dans un plan parallèle aux faces (S1, S2) du filtre.

Préférentiellement, ledit émetteur est agencé par rapport audit récepteur pour émettre un faisceau suivant une direction perpendiculaire à celle du flux d'air.

Selon l'invention, l'unité de traitement est intégrée à l'unité de mesure d'encrassement.

Selon une particularité, l'unité de traitement comporte des moyens de conversion du signal reçu du récepteur en données de mesure numériques et des moyens de mémorisation desdites données de mesure.

Selon une autre particularité, le système comporte une unité centrale externe agencée pour échanger des données avec l'unité de traitement et comportant un dispositif de lecture agencé pour lire des données de mesure mémorisées par l'unité de traitement en employant une technologie de communication sans-contact.

Selon un premier mode de réalisation, le système comporte une antenne connectée à l'unité de traitement et agencée pour permettre à l'unité de traitement d'échanger des données de mesure selon ladite technologie de communication sans contact et pour alimenter l'unité de mesure d'encrassement. Avantageusement, la technologie de communication sans contact est de type RFID ou de type NFC.

Selon un second mode de réalisation, le système comporte une unité centrale externe agencée pour échanger des données avec l'unité de traitement et comportant un dispositif de lecture agencé pour lire des données de mesure mémorisées dans l'unité de traitement en employant une technologie de communication filaire. L'unité de traitement comporte par exemple un connecteur agencé pour permettre à l'unité de traitement d'échanger des données de mesure par la communication filaire avec l'unité centrale externe selon un protocole de communication déterminé.

Selon une autre particularité, l'émetteur, le récepteur et l'unité de traitement sont agencés dans un boîtier en forme de fourche présentant deux branches parallèles reliées entre elles par une portion centrale de liaison.

Avantageusement, le système comporte une unité de signalisation commandée par l'unité centrale et agencée pour signaler un degré d'encrassement du filtre à partir des données de mesure obtenues.

Selon une autre particularité, le système peut comporter un dispositif de remplacement automatique du filtre commandé par l'unité centrale lorsque le degré d'encrassement du filtre dépasse un niveau seuil déterminé. Le dispositif de remplacement automatique du filtre comporte par exemple un organe de commande de type électroaimant.

Avantageusement, le filtre présente une forme parallélépipédique. En variante, il peut se présenter sous la forme d'une bande à dérouler devant le ventilateur au fur et à mesure de son encrassement.

Avantageusement, l'unité de mesure d'encrassement est agencée pour émettre un faisceau de type électromagnétique. Le faisceau est par exemple de type infrarouge ou ultrasonique.

### Brève description des figures

D'autres caractéristiques et avantages vont apparaître dans la description détaillée qui suit faite en regard des dessins annexés dans lesquels :
- la figure 1 représente de manière schématique et vu de côté le système de filtrage de l'invention,
- la figure 2 représente de manière schématique le système de filtrage de l'invention, le filtre étant vu en coupe longitudinale,
- la figure 3 représente, vu en perspective, le filtre employé dans l'invention,
- la figure 4A représente une unité de mesure d'encrassement du filtre connectée par liaison sans contact avec une unité centrale,
- la figure 4B représente une unité de mesure d'encrassement du filtre connectée par liaison filaire à une unité centrale,
- la figure 5 représente une unité de mesure d'encrassement fonctionnement par réflexion de signaux,
- la figure 6 représente le système de filtrage de l'invention présentant un dispositif de remplacement automatique du filtre.

### Description détaillée d'au moins un mode de réalisation

L'invention concerne un système de filtrage incluant une mesure d'encrassement du filtre.

Le système de filtrage de l'invention sera parfaitement adapté pour être employé dans une installation de chauffage, ventilation ou climatisation (HVAC), notamment utilisé pour refroidir l'intérieur d'une armoire électrique. Bien entendu cette application n'est pas limitative et d'autres applications pourraient être envisagées.

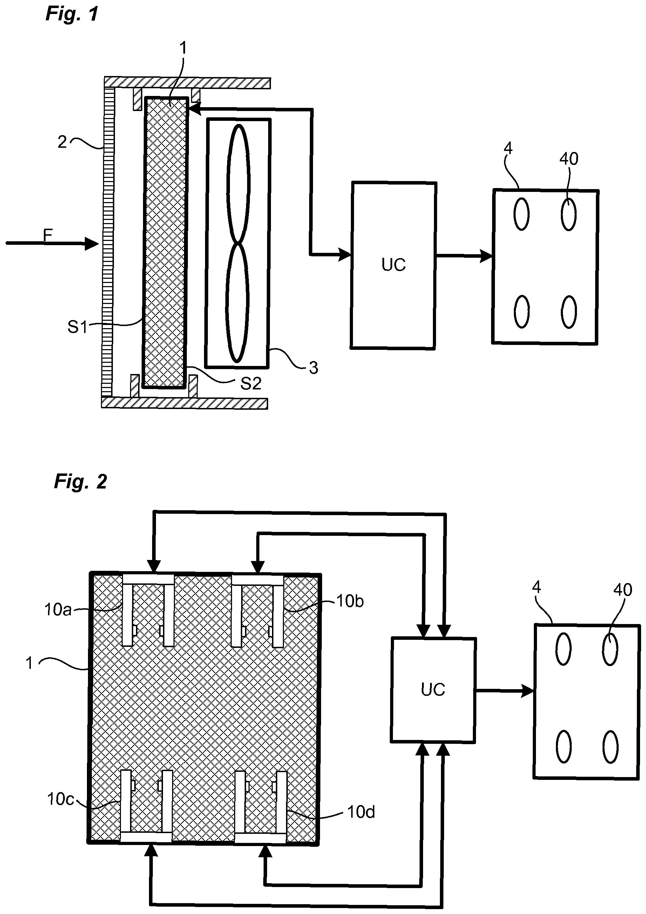

En référence à la figure 1, le système de filtrage de l'invention comporte un filtre 1 fabriqué dans un matériau filtrant et positionné entre une grille 2 de ventilation et un ventilateur 3 adapté pour générer un flux d'air F de l'extérieur de l'armoire vers l'intérieur de l'armoire. Le filtre 1 présente par exemple deux faces S1, S2 principales parallèles, le filtre étant agencé de manière à ce que ses deux faces S1, S2 soient positionnées perpendiculairement au flux d'air F. La distance entre les deux faces S1, S2 du filtre forme l'épaisseur de celui-ci. Le filtre 1 sera par exemple de forme parallélépipédique.

Le système présente la particularité de présenter au moins une unité 10 (10a, 10b, 10c, 10d) de mesure d'encrassement noyée dans le filtre 1 et donc solidaire du filtre 1. Le remplacement du filtre 1 engendre donc nécessairement le remplacement de l'unité 10 de mesure d'encrassement. Avantageusement, comme représenté sur la figure 2, le système comporte par exemple plusieurs unités 10a, 10b, 10c, 10d de mesure d'encrassement, par exemple quatre unités de mesure d'encrassement réparties sur le filtre.

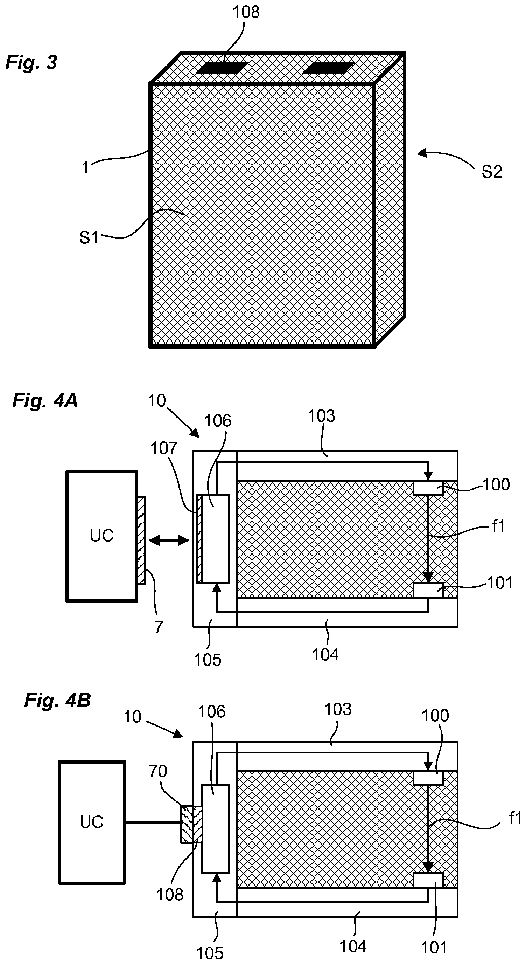

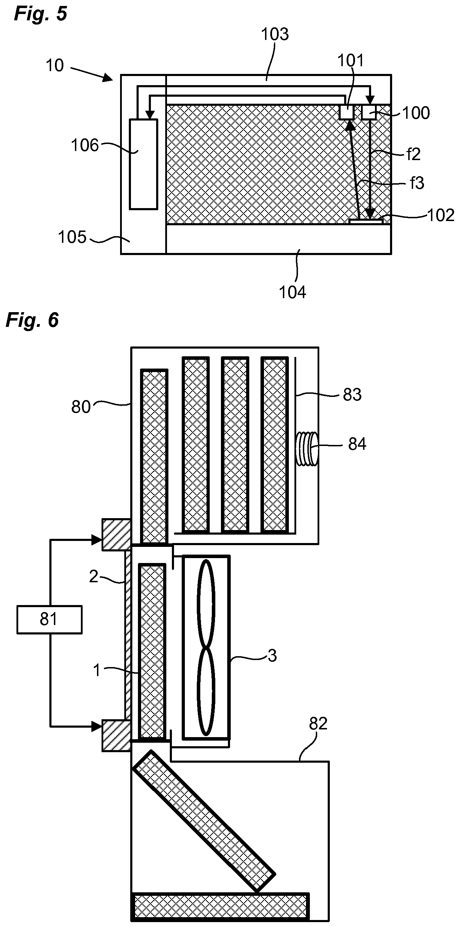

En référence aux figures 4A, 4B et 5, une unité 10 de mesure d'encrassement se compose d'un émetteur 100 d'un faisceau pour la mesure d'encrassement et d'un récepteur 101 dudit faisceau. Le faisceau est de nature à permettre une analyse de spectre en fréquence pour détecter l'encrassement. L'émetteur 100 émet par exemple un faisceau de rayonnement électromagnétique, tel que par exemple un faisceau de lumière infrarouge ou proche de l'infrarouge, de lumière visible, ou de type ultrasonique. L'émetteur sera par exemple une diode électroluminescente, un laser ou une autre source de rayonnement. Le récepteur 101 sera adapté pour capter le rayonnement émis par l'émetteur.

Chaque unité 10 de mesure d'encrassement pourra fonctionner sur le principe de la transmission ou de la réflexion. Dans le cas de la transmission, l'émetteur 100 et le récepteur 101 sont séparés l'un de l'autre de sorte que l'émetteur 100 émet un faisceau f1 à destination du récepteur 101 (voir figures 4A et 4B). Dans le cas de la réflexion (figures 4A et 4B), l'émetteur 100 et le récepteur 101 sont adjacents et l'émetteur 100 émet un faisceau f2 vers un réflecteur 102 qui renvoie un faisceau f3 réfléchi vers le récepteur 101 (voir figure 5).

Avantageusement, l'émetteur 100 et le récepteur 101 sont agencés dans un boîtier en forme de fourche présentant deux branches 103, 104 parallèles et une portion centrale 105 reliant les deux branches parallèles. Pour un fonctionnement en transmission, l'émetteur 100 et le récepteur 101 sont agencés chacun sur une branche 103, 104 distincte de la fourche. Pour un fonctionnement en réflexion, l'émetteur 100 et le récepteur 101 sont positionnés sur une même branche 103 de la fourche et l'élément réfléchissant 102 est positionné sur l'autre branche 104 de la fourche. Sur les figures 4A 4B et 5, on peut voir que de la matière filtrante composant le filtre 1 est positionnée entre les deux branches de chaque unité de mesure d'encrassement.

La distance entre l'émetteur 100 et le récepteur peut notamment être choisie selon l'épaisseur du filtre 1, cette distance étant préférentiellement supérieure à l'épaisseur du filtre 1.

Selon l'invention, chaque unité 10 de mesure est noyée à l'intérieur du filtre 1 et l'émetteur 100 et le récepteur 101 sont agencés de manière à ce que les faisceaux soient générés suivant une direction transversale à celle du flux d'air F qui traverse le filtre 1. Avantageusement, les faisceaux sont générés suivant une direction perpendiculaire à celle du flux d'air F qui traverse le filtre 1, c'est-à-dire selon un ou plusieurs plans parallèles aux deux surfaces S1, S2 du filtre 1.

Chaque unité 10 de mesure d'encrassement comporte une unité de traitement 106, par exemple agencée à l'intérieur de la portion centrale 105 de la fourche. Cette unité de traitement 106 est agencée pour commander l'émission des faisceaux de mesure par l'émetteur 100 et pour traiter les faisceaux reçus par le récepteur 101. Cette unité de traitement 106 comporte un microcontrôleur et des moyens de mémorisation. Elle comporte préférentiellement un convertisseur analogique/numérique pour convertir les signaux analogiques générés par le récepteur en données de mesure numériques qui seront mémorisées dans ses moyens de mémorisation.

Le système comporte également une unité centrale UC externe au filtre 1 et destinée à recueillir les données de mesure mémorisées dans chaque unité 10 de mesure d'encrassement. Cette unité centrale UC est par exemple un contrôleur logique programmable (PLC) comportant plusieurs entrées connectées chacune à une unité 10a, 10b, 10c, 10d, de mesure d'encrassement distincte (voir figure 2). L'unité centrale UC comporte des moyens de traitement destinés à déterminer un degré d'encrassement du filtre 1 à partir des données de mesure fournies par chaque unité 10 de mesure d'encrassement.

Le système de l'invention comporte également une unité 4 de signalisation connectée sur une sortie de l'unité centrale. Cette unité 4 de signalisation est commandée par l'unité centrale UC pour signaler le degré d'encrassement du filtre. L'unité 4 de signalisation comporte par exemple plusieurs indicateurs 40, par exemple lumineux, destinés à illustrer le degré d'encrassement du filtre 1 et par exemple à alerter un opérateur de la nécessité de le remplacer si un niveau seuil est dépassé.

L'échange des données entre chaque unité 10 de mesure d'encrassement et l'unité centrale UC peut être réalisé par liaison sans contact ou par liaison filaire.

La figure 4A illustre un échange de données sans contact. L'unité 10 de mesure d'encrassement comporte une antenne 107 connectée à son unité de traitement 106. L'unité centrale UC comporte également une antenne 7 agencée pour être en couplage inductif avec l'antenne 107 de l'unité de mesure. Par technologie inductive, un dispositif de lecture de l'unité centrale UC alimente les circuits électroniques de l'unité de mesure d'encrassement, c'est-à-dire son unité de traitement 106, l'émetteur 100 et le récepteur 101. Par ailleurs, par une technologie de communication de type RFID (« Radio Frequency Identification ») ou NFC (« Near Field Communication »), le dispositif de lecture de l'unité centrale UC est agencé pour lire les données de mesure stockées dans les moyens de mémorisation de l'unité de traitement 106 de l'unité 10 de mesure d'encrassement.

La figure 4B illustre un échange de données par liaison filaire. Dans cette solution, l'unité 10 de mesure d'encrassement comporte un connecteur 108 apparent sur l'extérieur du filtre (comme représenté sur la figure 3) sur laquelle peut venir se connecter un connecteur correspondant 70 d'un câble relié à l'unité centrale UC.

Les mesures d'encrassement réalisées par chaque unité 10 de mesure sont commandées de manière synchronisée par l'unité centrale UC de manière à pouvoir corréler les données de mesure obtenues et à en déduire le degré d'encrassement du filtre 1 à un instant donné.

Avantageusement, le système de filtrage de l'invention peut comporter un dispositif de remplacement automatique du filtre. Ce dispositif de remplacement automatique comporte un réservoir 80 de filtres neufs, un organe 81 de commande de remplacement et un réceptacle 82 destiné à recueillir les filtres usagés. Dans le réservoir 80, les filtres neufs sont par exemple agencés sur un support 83 monté sur un ressort 84 permettant de toujours placer un filtre neuf en attente. L'organe de commande 81 comporte par exemple un ou plusieurs électro-aimants commandés par l'unité centrale UC. L'organe de commande 81 est agencé pour commander le retrait du filtre usagé du système vers le réceptacle 82 et la descente par gravité d'un filtre neuf en vis-à-vis du ventilateur 3. Dans une variante de réalisation non représentée, le filtre peut se présenter sous la forme d'une bande venant se dérouler en vis-à-vis du ventilateur 3.

Le système de l'invention présente ainsi les avantages suivants :
- encombrement limité car les unités de mesure sont noyés dans le filtre et non à l'extérieur,
- dynamique de mesure importante de par l'utilisation d'une fourche dont la distance entre l'émetteur et le récepteur peut être grande devant l'épaisseur du filtre,
- peu de câblage nécessaire, notamment dans la solution sans contact,
- obtention d'un degré d'encrassement fiable du fait de l'emploi de plusieurs unités de mesure d'encrassement,
- possibilité de remplacer le filtre automatiquement, permettant de réduire les coûts de maintenance,
- possibilité de réaliser de la maintenance prédictive.

## Revendications

1. Système de filtrage pour installation de chauffage, ventilation ou climatisation, comprenant :
- un filtre (1) fabriqué dans un matériau filtrant, destiné à être traversé par un flux d'air (F) et comprenant deux faces (S1, S2) parallèles entre elles et perpendiculaires au flux d'air,
- au moins une unité (10) de mesure d'encrassement comprenant un émetteur (100) agencé pour émettre un faisceau et un récepteur (101) agencé pour recevoir ledit faisceau,
- une unité de traitement (106) agencée pour commander l'émission du faisceau par ledit émetteur (100) et pour traiter le signal généré par le récepteur après réception du faisceau,
- **caractérisé en ce que** :
- l'unité (10) de mesure d'encrassement est noyée dans ledit filtre (1),
- ledit émetteur (100) est agencé par rapport audit récepteur (101) pour émettre un faisceau suivant une direction transversale à celle du flux d'air (F) et située dans un plan parallèle aux faces (S1, S2) du filtre.

2. Système selon la revendication 1, **caractérisé en ce que** ledit émetteur (100) est agencé par rapport audit récepteur (101) pour émettre un faisceau suivant une direction perpendiculaire à celle du flux d'air (F).

3. Système selon la revendication 1, **caractérisé en ce que** l'unité de traitement (106) est intégrée à l'unité (10) de mesure d'encrassement.

4. Système selon la revendication 3, **caractérisé en ce que** l'unité de traitement (106) comporte des moyens de conversion du signal reçu du récepteur en données de mesure numériques et des moyens de mémorisation desdites données de mesure.

5. Système selon la revendication 3 ou 4, **caractérisé en ce qu'**il comporte une unité centrale (UC) externe agencée pour échanger des données avec l'unité de traitement (106) et comportant un dispositif de lecture agencé pour lire des données de mesure mémorisées par l'unité de traitement (106) en employant une technologie de communication sans-contact.

6. Système selon la revendication 5, **caractérisé en ce qu'**il comporte une antenne (7) connectée à l'unité de traitement (106) et agencée pour permettre à l'unité de traitement (106) d'échanger des données de mesure selon ladite technologie de communication sans contact et pour alimenter l'unité (10) de mesure d'encrassement.

7. Système selon la revendication 6, **caractérisé en ce que** la technologie de communication sans contact est de type RFID.

8. Système selon la revendication 6, **caractérisé en ce que** la technologie de communication sans contact est de type NFC.

9. Système selon la revendication 3 ou 4, **caractérisé en ce qu'**il comporte une unité centrale (UC) externe agencée pour échanger des données avec l'unité de traitement (106) et comportant un dispositif de lecture agencé pour lire des données de mesure mémorisées dans l'unité de traitement (106) en employant une technologie de communication filaire.

10. Système selon la revendication 9, **caractérisé en ce que** l'unité de traitement (106) comporte un connecteur (70) agencé pour permettre à l'unité de traitement (106) d'échanger des données de mesure par la communication filaire avec l'unité centrale (UC) externe selon un protocole de communication déterminé.

11. Système selon l'une des revendications 3 à 10, **caractérisé en ce que** l'émetteur, le récepteur et l'unité de traitement sont agencés dans un boîtier en forme de fourche présentant deux branches parallèles reliées entre elles par une portion centrale de liaison.

12. Système selon l'une des revendications 1 à 11, **caractérisé en ce qu'**il comporte une unité (4) de signalisation commandée par l'unité centrale (UC) et agencée pour signaler un degré d'encrassement du filtre (1) à partir des données de mesure obtenues.

13. Système selon l'une des revendications 1 à 12, **caractérisé en ce qu'**il comporte un dispositif de remplacement automatique du filtre commandé par l'unité centrale (UC) lorsque le degré d'encrassement du filtre (1) dépasse un niveau seuil déterminé.

14. Système selon la revendication 13, **caractérisé en ce que** le dispositif de remplacement automatique du filtre (1) comporte un organe de commande (81) de type électroaimant.

15. Système selon l'une des revendications 1 à 14, **caractérisé en ce que** le filtre (1) présente une forme parallélépipédique.

16. Système selon l'une des revendications 1 à 15, **caractérisé en ce que** le filtre (1) est réalisé sous la forme d'une bande.

17. Système selon l'une des revendications 1 à 16, **caractérisé en ce que** l'unité (10) de mesure d'encrassement est agencée pour émettre un faisceau de type électromagnétique ou ultrasonique.

## Patentansprüche

1. Filtersystem für Heizungs-, Lüftungs- oder Klimaanlage, umfassend:
- einen aus einem Filtermaterial hergestellten Filter (1), der dazu bestimmt ist, von einem Luftstrom (F) durchquert zu werden, und zwei untereinander parallele und zum Luftstrom senkrechte Flächen (S1, S2) umfasst,
- mindestens eine Einheit (10) zur Verschmutzungsmessung, umfassend einen Sender (100), der so gestaltet ist, dass er einen Strahl aussendet, und einen Empfänger (101), der so gestaltet ist, dass er den Strahl empfängt,
- eine Verarbeitungseinheit (106), die so gestaltet ist, dass sie das Senden des Strahls durch den Sender (100) steuert und das vom Empfänger nach dem Empfangen des Strahls erzeugte Signal verarbeitet,
**dadurch gekennzeichnet, dass**:
- die Einheit (10) zur Verschmutzungsmessung in den Filter (1) eingebettet ist,
- der Sender (100) in Bezug auf den Empfänger (101) so gestaltet ist, dass er einen Strahl entlang einer Richtung aussendet, die quer zu der des Luftstroms (F) verläuft und in einer Ebene parallel zu den Flächen (S1, S2) des Filters liegt.

2. System nach Anspruch 1, **dadurch gekennzeichnet, dass** der Sender (100) in Bezug auf den Empfänger (101) so gestaltet ist, dass er einen Strahl entlang einer Richtung aussendet, die senkrecht zu der des Luftstroms (F) verläuft.

3. System nach Anspruch 1, **dadurch gekennzeichnet, dass** die Verarbeitungseinheit (106) in die Einheit (10) zur Verschmutzungsmessung integriert ist.

4. System nach Anspruch 3, **dadurch gekennzeichnet, dass** die Verarbeitungseinheit (106) Mittel zum Umwandeln des vom Empfänger empfangenen Signals in digitale Messdaten und Mittel zum Speichern der Messdaten umfasst.

5. System nach Anspruch 3 oder 4, **dadurch gekennzeichnet, dass** es eine externe Zentraleinheit (UC) umfasst, die so gestaltet ist, dass sie Daten mit der Verarbeitungseinheit (106) austauscht, und eine Lesevorrichtung umfasst, die so gestaltet ist, dass sie von der Verarbeitungseinheit (106) gespeicherte Messdaten unter Verwendung einer kontaktlosen Kommunikationstechnologie liest.

6. System nach Anspruch 5, **dadurch gekennzeichnet, dass** es eine Antenne (7) umfasst, die an die Verarbeitungseinheit (106) angeschlossen ist und so gestaltet ist, dass sie es der Verarbeitungseinheit (106) ermöglicht, Messdaten nach der kontaktlosen Kommunikationstechnologie auszutauschen, und dass sie die Einheit (10) zur Verschmutzungsmessung speist.

7. System nach Anspruch 6, **dadurch gekennzeichnet, dass** der Typ der drahtlosen Kommunikationstechnologie RFID ist.

8. System nach Anspruch 6, **dadurch gekennzeichnet, dass** der Typ der drahtlosen Kommunikationstechnologie NFC ist.

9. System nach Anspruch 3 oder 4, **dadurch gekennzeichnet, dass** es eine externe Zentraleinheit (UC) umfasst, die so gestaltet ist, dass sie Daten mit der Verarbeitungseinheit (106) austauscht, und eine Lesevorrichtung umfasst, die so gestaltet ist, dass sie in der Verarbeitungseinheit (106) gespeicherte Messdaten unter Verwendung einer drahtgebundenen Kommunikationstechnologie liest.

10. System nach Anspruch 9, **dadurch gekennzeichnet, dass** die Verarbeitungseinheit (106) einen Steckverbinder (70) umfasst, der so gestaltet ist, dass er es der Verarbeitungseinheit (106) ermöglicht, Messdaten über die drahtgebundene Kommunikation mit der externen Zentraleinheit (UC) nach einem bestimmten Kommunikationsprotokoll auszutauschen.

11. System nach einem der Ansprüche 3 bis 10, **dadurch gekennzeichnet, dass** der Sender, der Empfänger und die Verarbeitungseinheit in einem gabelförmigen Gehäuse angeordnet sind, das zwei parallele, untereinander über einen zentralen Verbindungsabschnitt verbundene Schenkel aufweist.

12. System nach einem der Ansprüche 1 bis 11, **dadurch gekennzeichnet, dass** es eine Anzeigeeinheit (4) umfasst, die von der Zentraleinheit (UC) gesteuert wird und so gestaltet ist, dass sie einen Verschmutzungsgrad des Filters (1) ausgehend von den erhaltenen Messdaten anzeigt.

13. System nach einem der Ansprüche 1 bis 12, **dadurch gekennzeichnet, dass** es eine Vorrichtung zum automatischen Austauschen des Filters umfasst, die von der Zentraleinheit (UC) gesteuert wird, wenn der Verschmutzungsgrad des Filters (1) einen bestimmten Schwellenwert überschreitet.

14. System nach Anspruch 13, **dadurch gekennzeichnet, dass** die Vorrichtung zum automatischen Austauschen des Filters (1) ein Betätigungsorgan (81) von der Art eines Elektromagneten umfasst.

15. System nach einem der Ansprüche 1 bis 14, **dadurch gekennzeichnet, dass** der Filter (1) eine Quaderform aufweist.

16. System nach einem der Ansprüche 1 bis 15, **dadurch gekennzeichnet, dass** der Filter (1) bandförmig ausgeführt ist.

17. System nach einem der Ansprüche 1 bis 16, **dadurch gekennzeichnet, dass** die Einheit (10) zur Verschmutzungsmessung so gestaltet ist, dass sie einen elektromagnetischen oder Ultraschallstrahl aussendet.

## Claims

1. Filtering system for heating, ventilation or air conditioning installation, comprising:
- a filter (1) manufactured in a filtering material, intended to be passed through by a flow of air (F) and comprising two faces (S1, S2) parallel to one another and at right angles to the flow of air,
- at least one clogging measurement unit (10) comprising an emitter (100) arranged to emit a beam and a receiver (101) arranged to receive said beam,
- a processing unit (106) arranged to control the emission of the beam by said emitter (100) and to process the signal generated by the receiver after reception of the beam,
**characterized in that**:
- the clogging measurement unit (10) is embedded in said filter (1),
- said emitter (100) is arranged in relation to said receiver (101) to emit a beam in a direction transversal to that of the flow of air (F) and situated in a plane parallel to the faces (S1, S2) of the filter.

2. System according to Claim 1, **characterized in that** said emitter (100) is arranged in relation to said receiver (101) to emit a beam in a direction at right angles to that of the flow of air (F).

3. System according to Claim 1, **characterized in that** the processing unit (106) is incorporated in the clogging measurement unit (10).

4. System according to Claim 3, **characterized in that** the processing unit (106) comprises means for converting the signal received from the receiver into digital measurement data and means for storing said measurement data.

5. System according to Claim 3 or 4, **characterized in that** it comprises an external central processing unit (CPU) arranged to exchange data with the processing unit (106) and comprising a reading device arranged to read measurement data stored by the processing unit (106) by employing a contactless communication technology.

6. System according to Claim 5, **characterized in that** it comprises an antenna (7) connected to the processing unit (106) and arranged to allow the processing unit (106) to exchange measurement data according to said contactless communication technology and to supply the clogging measurement unit (10).

7. System according to Claim 6, **characterized in that** the contactless communication technology is of RFID type.

8. System according to Claim 6, **characterized in that** the contactless communication technology is of NFC type.

9. System according to Claim 3 or 4, **characterized in that** it comprises an external central processing unit (CPU) arranged to exchange data with the processing unit (106) and comprising a reading device arranged to read measurement data stored in the processing unit (106) by employing a wired communication technology.

10. System according to Claim 9, **characterized in that** the processing unit (106) comprises a connector (70) arranged to allow the processing unit (106) to exchange measurement data by the wired communication with the external central processing unit (CPU) according to a determined communication protocol.

11. System according to one of Claims 3 to 10, **characterized in that** the emitter, the receiver and the processor unit are arranged in a fork-shaped housing having two parallel branches linked to one another by a central link portion.

12. System according to one of Claims 1 to 11, **characterized in that** it comprises a signalling unit (4) controlled by the central processing unit (CPU) and arranged to signal a degree of clogging of the filter (1) from the measurement data obtained.

13. System according to one of Claims 1 to 12, **characterized in that** it comprises a device for automatic replacement of the filter controlled by the central processing unit (CPU) when the degree of clogging of the filter (1) exceeds a determined threshold level.

14. System according to Claim 13, **characterized in that** the device for automatic replacement of the filter (1) comprises a control member (81) of electromagnet type.

15. System according to one of Claims 1 to 14, **characterized in that** the filter (1) has a parallelepipedal shape.

16. System according to one of Claims 1 to 15, **characterized in that** the filter (1) is produced in the form of a strip.

17. System according to one of Claims 1 to 16, **characterized in that** the clogging measurement unit (10) is arranged to emit a beam of electromagnetic or ultrasound type.
